# EUROPEAN PATENT APPLICATION

(11) **EP 4 417 392 A1**
(43) Date of publication of application: **21.08.2024**
(21) Application number: 22880503.2
(22) Date of filing: 07.10.2022
(51) Int. Cl.: B29C 48/08, B29C 51/00, B32B 1/02, B32B 27/28, B32B 27/30, B32B 7/12, B65D 1/00, B65D 1/34, B65D 25/00, C08J 5/18, C08L 3/04, C08L 3/08, C09D 103/08

(54) **RESIN COMPOSITION AND METHOD FOR PRODUCING SAME**

(30) Priority: 11.10.2021 JP 2021166977
(71) Applicant: Plantic Technologies LTD, Altona, VIC 3018 (AU)
(72) Inventor: OTA, Masahiko, Kurashiki-shi, Okayama 713-8550 (JP)
(74) Representative: Müller-Boré & Partner Patentanwälte PartG mbB
(86) International application number: PCT/IB2022/059583
(87) International publication number: WO 2023/062490

(57) **Abstract**

The present invention relates to a resin composition comprising:
50 to 98 parts by mass of modified starch (A);
2 to 50 parts by mass of polyvinyl alcohol (B); and
0.01 to 0.15 part by mass of a compound represented by formula (1): 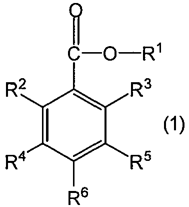 or a salt thereof (C),
in which the total content of the components (A), (B) and (C) is 100 parts by mass, and the average amylose content in the modified starch (A) is 50% by mass or more.

## Description

### TECHNICAL FIELD

The present invention relates to: a resin composition that can be used for a food packaging container or the like; a method for producing the resin composition; a water-containing composition comprising the resin composition; a method for producing the water-containing composition; a coated product comprising a paper or film coated with the water-containing composition; and a method for producing the coated product; a multi-layer structure comprising the coated product; a film or sheet comprising the resin composition; a laminate comprising the film or sheet; a packaging material comprising the coated product or the multi-layer structure; a tray or cup for packaging, comprising the film or sheet or the laminate; and a method for producing the tray or cup for packaging.

### BACKGROUND ART

Heretofore, a resin composition containing modified starch and polyvinyl alcohol has been used widely for a container for packaging a food or the like because of the excellent biodegradability thereof (see, for example, JP-A-2002-532600).

### PRIOR ART DOCUMENT

### PATENT DOCUMENT

Patent Document 1: JP-A-2002-532600

### SUMMARY OF THE INVENTION

### PROBLEMS TO BE SOLVED BY THE INVENTION

A resin composition to be used as a container for packaging a food is required to have high oxygen barrier properties and is also required to have excellent impact strength in order to avoid the breakage by impact or the like. However, according to the studies by the present inventors, it was found that satisfactory impact strength of a resin composition containing modified starch and polyvinyl alcohol cannot be achieved and the oxygen barrier properties of the resin composition cannot be kept at a high level even when an impact strength improver (e.g., an inorganic substance such as talc, rubber particles) is added to the resin composition for the purpose of improving the impact strength.

Therefore, the object of the present invention is to provide: a resin composition having excellent impact strength and oxygen barrier properties; a method for producing the resin composition; a water-containing composition comprising the resin composition; a method for producing the water-containing composition; a coated product comprising a paper or a film coated with the water-containing composition; and a method for producing the coated product; a multi-layer structure comprising the coated product; a film or a sheet comprising the resin composition; a laminate comprising the film or the sheet; a packaging material comprising the coated product or the multi-layer structure; a tray or cup for packaging, comprising the film or the sheet or the laminate; and a method for producing the tray or cup for packaging.

### MEANS FOR SOLVING PROBLEMS

In order to solve the problem, the present inventors have studied in detail about a resin composition comprising modified starch (A) and polyvinyl alcohol (B). As a result, the present invention has been accomplished. The present invention includes the following preferred aspects.
[1] A resin composition comprising:
   50 to 98 parts by mass of modified starch (A);
   2 to 50 parts by mass of polyvinyl alcohol (B); and
   0.01 to 0.15 parts by mass of a compound represented by formula (1): 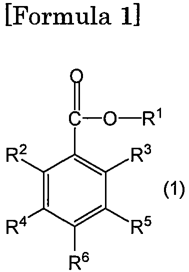 (wherein R¹ represents an alkyl group having 1 to 12 carbon atoms, an aryl group having 6 to 20 carbon atoms, or an aralkyl group having 7 to 20 carbon atoms; R² to R⁵ independently represent a hydrogen atom, a halogen atom, an alkyl group having 1 to 12 carbon atoms, a hydroxyl group, or an alkoxy group having 1 to 12 carbon atoms; and R⁶ represents a hydroxyl group, or an alkoxy group having 1 to 12 carbon atoms)
   or a salt thereof (C),
   wherein the total content of the components (A), (B) and (C) is 100 parts by mass, and the average amylose content in the modified starch (A) is 50% by mass or more.
[2] The resin composition according to item [1], wherein R¹ is an alkyl group having 1 to 6 carbon atoms or an aralkyl group having 7 to 9 carbon atoms in formula (1).
[3] The resin composition according to item [1] or [2], wherein the total content of the modified starch (A), the polyvinyl alcohol (B) and the compound represented by formula (1) or a salt thereof (C) is 80% by mass or more per the mass of the resin composition.
[4] The resin composition according to any one of items [1] to [3], wherein the modified starch (A) is at least one selected from the group consisting of etherified starch, esterified starch, cationized starch and crosslinked starch.
[5] The resin composition according to any one of items [1] to [4], wherein the modified starch (A) is at least one selected from the group consisting of etherified starch having a hydroxyalkyl group having 2 to 6 carbon atoms and esterified starch having a structural unit derived from a dicarboxylic anhydride.
[6] The resin composition according to any one of items [1] to [5], wherein a 4% aqueous solution of the polyvinyl alcohol (B) has a viscosity at 20°C of 1 to 50 mPa ·s when measured in accordance with JIS Z 8803.
[7] The resin composition according to any one of items [1] to [6], wherein the resin composition further comprises 0.1 to 10 parts by mass of a polyoxyalkylene (D) and/or 0.01 to 5 parts by mass of a polyol plasticizer (E), and the total content of the components (A), (B), (C), (D) and (E) is 100 parts by mass.
[8] A water-containing composition comprising the resin composition according to any one of items [1] to [7], wherein the water content of the water-containing composition is 1 to 50% by mass.
[9] A coated product comprising a paper or a film and the water-containing composition according to item [8] coated on the paper or the film.
[10] A multi-layer structure comprising the coated product according to item [9] and one or more layer (X).
[11] A packaging material comprising the coated product according to item [9] or the multi-layer structure according to item [10].
[12] A method for producing the coated product according to item [9], the method comprising a step for coating a film or a paper conveyed by a winding machine with the water-containing composition according to item [8] using an extruder.
[13] A film or a sheet comprising the resin composition according to any one of items [1] to [7].
[14] A laminate comprising the film or the sheet according to item [13] and one or more layer (X).
[15] A tray or a cup for packaging, comprising the film or the sheet according to item [13], or the laminate according to item [14].
[16] A method for producing the tray or the cup for packaging according to item [15], the method comprising:
   a step for shaping the resin composition according to any one of items [1] to [7] using an extruder to produce a film or a sheet;
   a step for laminating one or more layer (X) on the film or the sheet by means of lamination to produce a laminate; and
   a step for thermoforming the laminate into a tray or a cup for packaging.
[17] A method for producing the resin composition according to any one of items [1] to [7], the method comprising a step for mixing the compound represented by formula (1) or a salt thereof (C) with a component other than the component (C) simultaneously.
[18] A method for producing the resin composition according to any one of items [1] to [7] or the water-containing composition according to item [8], the method comprising:
   a step for mixing a component other than a compound represented by formula (1) or a salt thereof (C) together to produce a mixture, and then adding an aqueous solution of the component (C) to the mixture; and
   optionally, a step for further drying the resultant mixture.

### EFFECTS OF THE INVENTION

The resin composition according to the present invention has excellent impact strength and oxygen barrier properties. Accordingly, the resin composition can be used suitably as a material for a package and a container for foods and the like.

### BRIEF DESCRIPTION OF THE DRAWINGS

Fig. 1 is a schematic diagram showing the process for producing coated products in Examples.
Fig. 2 is a schematic diagram of a twin screw extruder used in Examples.

### EMBODIMENTS OF THE INVENTION

### [Resin composition]

The resin composition according to the present invention comprises 50 to 98 parts by mass of modified starch (A), 2 to 50 parts by mass of polyvinyl alcohol (B), and 0.01 to 0.15 parts by mass of a compound represented by formula (1): 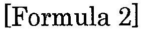 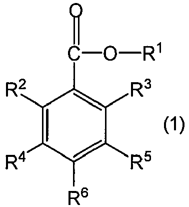 (wherein R¹ represents an alkyl group having 1 to 12 carbon atoms, an aryl group having 6 to 20 carbon atoms, or an aralkyl group having 7 to 20 carbon atoms; R² to R⁵ independently represent a hydrogen atom, a halogen atom, an alkyl group having 1 to 12 carbon atoms, a hydroxyl group, or an alkoxy group having 1 to 12 carbon atoms; and R⁶ represents a hydroxyl group, or an alkoxy group having 1 to 12 carbon atoms) or a salt thereof (C), in which the total content of the components (A), (B) and (C) is 100 parts by mass, and the average amylose content in the modified starch (A) is 50% by mass or more. The compound represented by formula (1) is also referred to as a "compound (1)", and the compound (1) and a salt thereof (C) are also referred to as "compounds (C)" collectively. The modified starch (A) is also referred to as a "component (A)" or is simply referred to as "(A)". The same rule is applied to other components.

The present inventors have studied about additive components capable of satisfactorily improving the impact strength of a resin composition containing modified starch and polyvinyl alcohol. As a result, the present inventors have found that, when a compound represented by formula (1) or a salt thereof (C) is added in an amount as small as 0.01 to 0.15 parts by mass to a resin composition containing 50 to 98 parts by mass of modified starch (A) having an average amylose content of 50% by mass or more and 2 to 50 parts by mass of polyvinyl alcohol (B), the impact strength of the resin composition can be significantly improved amazingly while keeping the excellent oxygen barrier properties of the resin composition. That reason is not clear, but it is assumed that the compound represented by formula (1) or a salt thereof (C) interacts with the modified starch (A) and the polyvinyl alcohol (B) effectively to locally impart an antiplasticization effect to the resin composition.

### <Modified starch (A)>

The modified starch (A) preferably is at least one selected from the group consisting of, for example, etherified starch, esterified starch, cationized starch and crosslinked starch.

Examples of the starch include cassava-derived starch, corn-derived starch, potato-derived starch, sweet potato-derived starch, sago-derived starch, tapioca-derived starch, common sorghum-derived starch, bean-derived starch, bracken-derived starch, lotus-derived starch, water chestnut-derived starch, wheat-derived starch, rice-derived starch, oat-derived starch, arrowroot-derived starch and pea-derived starch. Among these, corn-derived starch and cassava-derived starch are preferred, and starch derived from high-amylose corn is more preferred. These may be used singly, or two more of them may be used in combination.

Examples of the etherified starch include: alkyl-etherified starch such as methyl-etherified starch; carboxyalkyl-etherified starch such as carboxymethyl-etherified starch; and hydroxyalkyl etherified starch such as etherified starch having a hydroxyalkyl group having 2 to 6 carbon atoms. Allyl-etherified starch and the like can also be used.

Examples of the esterified starch include: esterified starch having a structural unit derived from a carboxylic acid, such as esterified starch having a structural unit derived from acetic acid; esterified starch having a structural unit derived from a dicarboxylic anhydride, such as esterified starch having a structural unit derived from maleic anhydride, esterified starch having a structural unit derived from phthalic anhydride, and esterified starch having a structural unit derived from octenylsuccinic anhydride; and esterified starch having a structural unit derived from an oxo acid, such as nitric acid-esterified starch, phosphoric acid-esterified starch, and urea-phosphoric acid-esterified starch. Other examples include xanthic acid-esterified starch, and acetoacetic acid-esterified starch.

Examples of the cationized starch include a reaction product of starch and 2-diethylaminoethyl chloride, and a reaction product of starch and 2,3-epoxypropyltrimethylammonium chloride.

Examples of the crosslinked starch include formaldehyde-crosslinked starch, epichlorohydrin-crosslinked starch, phosphoric acid-crosslinked starch, and acrolein-crosslinked starch.

From the viewpoint that the film formability when the resin composition is formed into a film or a sheet and a coated product can be improved, the modified starch (A) preferably is at least one selected from the group consisting of etherified starch having a hydroxyalkyl group having 2 to 6 carbon atoms and esterified starch having a structural unit derived from a dicarboxylic anhydride, more preferably is at least one selected from the group consisting of hydroxyethyl-etherified starch, hydroxypropyl-etherified starch, hydroxybutyl-etherified starch, esterified starch having a structural unit derived from maleic anhydride, esterified starch having a structural unit derived from phthalic anhydride, and esterified starch having a structural unit derived from octenylsuccinic anhydride. These modified starch (A) products may be used singly, or two or more of them may be used in combination. In the description, the number of carbon atoms associated with the term "starch" refers to the number of carbon atoms in a group that substitutes for one hydroxyl group in the starch (i.e., a group formed by modifying one hydroxyl group in the starch). For example, in etherified starch having a hydroxyalkyl group having 2 to 5 carbon atoms, the number of carbon atoms in an hydroxyalkyl group that is formed by modifying one hydroxyl group in the starch is 2 to 5.

The etherified starch having a hydroxyalkyl group having 2 to 6 carbon atoms may be, for example, a product of the reaction of starch with an alkylene oxide such as ethylene oxide, propylene oxide and butylene oxide. The average number of hydroxyl groups that are involved in the modification is preferably 0.05 to 2 per a single glucose unit in the starch.

In the modified starch (A), the average amylose content is 50% by mass or more. If the average amylose content in the modified starch (A) is less than 50% by mass, there is a tendency that sufficient impact strength, oxygen barrier properties and forming processability cannot be achieved. The average amylose content in the modified starch (A) is 50% by mass or more, preferably 55% by mass or more, more preferably 60% by mass or more, still more preferably 65% by mass or more, particularly preferably 70% by mass or more. When the average amylose content is equal to or more than the above-mentioned lower limit, impact strength, oxygen barrier properties and forming processability can be improved. The average amylose content in the modified starch (A) is generally 90% by mass or less. In the description, the amylose content can be determined by, for example, the iodine colorimetric analysis method prescribed in "Starch 50 No.4 158-163(1998)". When only one type of modified starch is used, the term "average amylose content" refers to an amylose content in the single type of modified starch. When two or more types of modified starch are used, the term "average amylose content" refers to a weighted average of the amylose contents in the two or more types of modified starch. For example, when two or more types of modified starch are used and the average amylose content is to be adjusted to 50% by mass or more, the modified starch component (A) may contain modified starch having an amylose content of less than 50% by mass.

In the modified starch (A), the water content in the modified starch (A) is preferably 5 to 15% by mass.

As the modified starch (A), a commercially available product may be used. Typical examples of the commercially available product of the modified starch (A) include ECOFILM (trademark) and National 1658 (trademark) which are hydroxypropyl-etherified starch products manufactured by Ingredion Incorporated.

The content of the modified starch (A) is 50 to 98 parts by mass per 100 parts by mass that is the total amount of the components (A), (B) and (C). If the content of the modified starch (A) is less than 50 parts by mass or more than 98 parts by mass, impact strength, oxygen barrier properties, winding properties, anti-adhesiveness and folding resistance tend to be deteriorated. In the description, when the component (D) and/or the component (E) is contained, the term "total amount of the components (A), (B) and (C)" refers to the sum total of the contents of the components (A), (B) and (C) and the content of the component (D) and/or the component (E).

The content of the modified starch (A) is 50 parts by mass or more, preferably 60 parts by mass or more, more preferably 68 parts by mass or more, still more preferably 70 parts by mass or more and is 98 parts by mass or less, preferably 95 parts by mass or less, more preferably 92 parts by mass or less per 100 parts by mass that is the total amount of the components (A), (B) and (C). When the content of the modified starch (A) falls within the above-mentioned range, impact strength, oxygen barrier properties, winding properties, anti-adhesiveness and folding resistance can be improved. In the present disclosure, the term "winding properties" refers to properties such that, when a conveyed paper or film is coated with the resin composition (or the water-containing composition) discharged through a die outlet port of an extruder, the resin composition can be coated without being broken. The wording "the winding properties are improved or increased" means that the resin composition can be coated readly without being broken when the paper or film is conveyed at a high speed. The term "anti-adhesiveness" refers to a property such that the resin composition cannot be adhered easily onto a metal roll during the production process. The wording "the anti-adhesiveness is improved or increased" means that the adhesiveness to the metal roll is reduced.

### <Polyvinyl alcohol (B)>

The polyvinyl alcohol (B) to be contained in the resin composition according to the present invention has a saponification degree of preferably 80 to 99.9% by mol. When the saponification degree of the polyvinyl alcohol (B) falls within the above-mentioned range, impact strength, oxygen barrier properties and winding properties can be improved. The saponification degree is more preferably 85% by mol or more, still more preferably 88% by mol or more, furthermore preferably 95% by mol or more. In the present disclosure, the term "saponification degree" refers to a molar fraction of hydroxyl groups per the total amount of hydroxyl groups and ester groups in the polyvinyl alcohol (B).

The polyvinyl alcohol (B) may further contain another monomer unit that is different from a vinyl alcohol unit. An example of the another monomer unit is a monomer unit derived from an ethylenically unsaturated monomer. Examples of the ethylenically unsaturated monomer include: an α-olefin such as ethylene, propylene, n-butene, isobutylene, and 1-hexene; acrylic acid and a salt thereof, an unsaturated monomer having an acrylate ester group; methacrylic acid and a salt thereof; an unsaturated monomer having a methacrylate ester group; acrylamide, N-methylacrylamide, N-ethylacrylamide, N,N-dimethylacrylamide, diacetoneacrylamide, acrylamidopropanesulfonic acid and a salt thereof, acrylamidopropyldimethylamine and a salt thereof (e.g., a quaternary salt); methacrylamide, N-methylmethacrylamide, N-ethylmethacrylamide, methacrylamidopropanesulfonic acid and a salt thereof, methacrylamidopropyldimethylamine and a salt thereof (e.g., a quaternary salt); a vinyl ether such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyle vinyl ether, and 2,3-diacetoxy-1-vinyloxypropane; a vinyl cyanide such as acrylonitrile and methacrylonitrile; a vinyl halide such as vinyl chloride and vinyl fluoride; a vinylidene halide such as vinylidene chloride and vinylidene fluoride; an allyl compound such as allyl acetate, 2,3-diacetoxy-1-allyloxypropane and allyl chloride; an unsaturated dicarboxylic acid such as maleic acid, itaconic acid and fumaric acid, and a salt or ester thereof; a vinylsilyl compound such as vinyltrimethoxysilane, and isopropenyl acetate; and a vinyl ester monomer such as vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate and vinyl benzoate. The content of the another monomer unit is preferably 10% by mol or less, more preferably 5% by mol or less. These polyvinyl alcohol (B) compounds may be used singly, or two or more of them may be used in combination.

The method for producing the polyvinyl alcohol (B) is not particularly limited. An example of the method comprises polymerizing a vinyl alcohol monomer and optionally another monomer to produce a polymer and then saponifying the polymer to convert the polymer to a vinyl alcohol unit. Examples of the polymerization mode to be employed for the polymerization include batch polymerization, semi-batch polymerization, continuous polymerization, and semi-continuous polymerization. Examples of the polymerization method include known methods including a bulk polymerization method, a solution polymerization method, a suspension polymerization method and an emulsion polymerization method. For the saponification of the polymer, any known method can be employed. For example, the saponification may be carried out in such a state where the polymer is dissolved in an alcohol or an aqueous alcohol. In this case, the alcohol that can be used is preferably a lower alcohol such as methanol and ethanol.

A viscosity of a 4% aqueous solution of the polyvinyl alcohol (B), which is measured at 20°C in accordance with JIS Z 8803, is preferably 1 mPa•s or more, more preferably 2 mPa•s or more, still more preferably 3 mPa•s or more, and is preferably 50 mPa•s or less, more preferably 45 mPa•s or less, still more preferably 35 mPa•s or less. When the viscosity of the polyvinyl alcohol (B) is equal to or more than the above-mentioned lower limit, oxygen barrier properties can be improved. When the viscosity is equal to or less than the above-mentioned upper limit, impact strength and winding properties can be improved. The viscosity of the polyvinyl alcohol (B) can be measured using a viscometer, and can be measured by, for example, the method mentioned in the section [Examples].

The content of the polyvinyl alcohol (B) is 2 to 50 parts by mass per 100 parts by mass that is the total amount of the components (A), (B) and (C). If the content of the polyvinyl alcohol (B) is less than 2 parts by mass or more than 50 parts by mass, impact strength, oxygen barrier properties, winding properties, anti-adhesiveness and folding resistance tend to be deteriorated.

The content of the polyvinyl alcohol (B) is 2 parts by mass or more, preferably 5 parts by mass or more, more preferably 8 parts by mass or more, and is 50 parts by mass or less, preferably 40 parts by mass or less, more preferably 32 parts by mass or less, still more preferably 30 parts by mass or less, per 100 parts by mass that is the total amount of the components (A), (B) and (C). When the content of the polyvinyl alcohol (B) is equal to or more than the above-mentioned lower limit, impact strength, oxygen barrier properties, winding properties and folding resistance can be improved. When the content is equal to or less than the above-mentioned upper limit, anti-adhesiveness can be improved.

### <Compound (C) or salt thereof>

The resin composition according to the present invention contains a compound represented by formula (1): 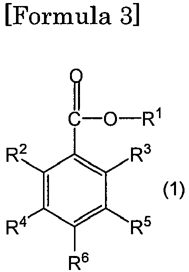 (wherein R¹ represents an alkyl group having 1 to 12 carbon atoms, an aryl group having 6 to 20 carbon atoms, or an aralkyl group having 7 to 20 carbon atoms; R² to R⁵ independently represent a hydrogen atom, a halogen atom, an alkyl group having 1 to 12 carbon atoms, a hydroxyl group, or an alkoxy group having 1 to 12 carbon atoms; and R⁶ represents a hydroxyl group, or an alkoxy group having 1 to 12 carbon atoms)
or a salt thereof (C). When the resin composition according to the present invention contains the compound (C) in a small amount, the impact strength of the resin composition can be significantly improved without deteriorating the excellent oxygen barrier properties thereof. Furthermore, when the resin composition contains the compound (C), the resin composition can have an excellent color hue even when the resin composition is stored in a water-containing state for a long period. In the present disclosure, the wording "excellent color hue" means that the degree of pigmentation is small, in other words, a b value (yellow index, YI) is small. The wording "the color hue is increased or improved" means that the degree of pigmentation is reduced, in other words, the b value is reduced. The wording "color hue after the storage in a water-containing state for a long period" is also simply referred to as a "post-storage color hue.

In R¹ in formula (1), examples of the alkyl group having 1 to 12 carbon atoms include a methyl group, an ethyl group, a n-propyl group, an isopropyl group, a n-butyl group, an isobutyl group, a sec-butyl group, a tert-butyl group, a n-pentyl group, a 2-methyl-butyl group, a 3-methylbutyl group, a 2-ethyl-propyl group, a n-hexyl group, a n-heptyl group, a n-octyl group, a tert-octyl group, a n-nonyl group and a n-decyl group. From the viewpoint that impact strength, oxygen barrier properties and post-storage color hue can be improved, an alkyl group having 1 to 6 carbon atoms, such as a methyl group, an ethyl group, a n-propyl group, a n-butyl group, an isobutyl group and a sec-butyl group, is preferred, and an alkyl group having 1 to 4 carbon atoms is more preferred. Examples of the aryl group having 6 to 20 carbon atoms include a phenyl group, a tolyl group, and a naphthyl group. From the viewpoint that impact strength, oxygen barrier properties and post-storage color hue can be improved, an aryl group having 6 to 8 carbon atoms, such as a phenyl group, is preferred. Examples of the aralkyl group having 7 to 20 carbon atoms include a benzyl group and a phenethyl group. From the viewpoint that impact strength, oxygen barrier properties and post-storage color hue can be improved, an aralkyl group having 7 to 9 carbon atoms, such as a benzyl group, is preferred. Among these residues for R¹ in formula (1), the alkyl group having 1 to 6 carbon atoms or the aralkyl group having 7 to 9 carbon atoms is preferred from the viewpoint that impact strength, oxygen barrier properties and post-storage color hue can be improved.

In R² to R⁵ in formula (1), examples of the halogen atom include a fluorine atom, a chlorine atom, a bromine atom and a iodine atom. Examples of the alkyl group having 1 to 12 carbon atoms include those groups which are exemplified for the alkyl group having 1 to 12 carbon atoms in R¹, and an alkyl group having 1 to 4 carton atoms is preferred. Examples of the alkoxy group having 1 to 12 carbon atoms include a methoxy group, an ethoxy group, a propoxy group, an isopropoxy group, a n-butoxy group, an isobutoxy group, a sec-butoxy group, a tert-butoxy group, a n-pentoxy group, a neopentoxy group, a n-hexoxy group, and a n-octoxy group, and an alkoxy group having 1 to 4 carbon atoms is preferred. Among the residues for R² to R⁵ in formula (1), a hydrogen atom or an alkyl group having 1 to 4 carbon atoms is preferred, and a hydrogen atom is more preferred, from the viewpoint that impact strength, oxygen barrier properties and post-storage color hue can be improved.

In R⁶ in formula (1), examples of the alkoxy group having 1 to 12 carbon atoms include those groups which are exemplified for the alkoxy group having 1 to 12 carbon atoms for R² to R⁵, and an alkoxy group having 1 to 4 carbon atoms is preferred. Among the residues for R⁶ in formula (1), a hydroxyl group is preferred from the viewpoint that impact strength, oxygen barrier properties and post-storage color hue can be improved.

In the compound (1) according to a preferred embodiment of the present invention, R¹ represents an alkyl group having 1 to 6 carbon atoms or an aralkyl group having 7 to 9 carbon atoms, R² to R⁵ independently represent a hydrogen atom or an alkyl group having 1 to 4 carbon atoms, and R⁶ represents a hydroxyl group. When the compound (1) of this type is contained, the impact strength, the oxygen barrier properties and the post-storage color hue of the resin composition can be improved.

Examples of the compound (C) include methylparaben, ethylparaben, benzylparaben, n-propylparaben, isopropylparaben, n-butylparaben, and salts thereof. From the viewpoint that impact strength, oxygen barrier properties and post-storage color hue can be improved, methylparaben, ethylparaben, benzylparaben, n-propylparaben, and salts thereof are preferred. These compounds (C) may be used singly, or two or more of them may be used in combination.

The content of the compound (C) is 0.01 to 0.15 parts by mass per 100 parts by mass that is the total amount of the components (A), (B) and (C). If the content of the compound (C) is less than 0.01 parts by mass or more than 0.15 parts by mass, impact strength, oxygen barrier properties, winding properties and anti-adhesiveness tend to be deteriorated.

The content of the compound (C) is 0.01 parts by mass or more, more preferably 0.02 parts by mass or more, still more preferably 0.04 parts by mass or more, and is 0.15 parts by mass or less, preferably 0.12 parts by mass or less, still more preferably 0.10 parts by mass or less, furthermore preferably 0.09 parts by mass or less, particularly preferably 0.08 parts by mass or less, particularly furthermore preferably 0.07 parts by mass or less. When the content of the compound (C) is equal to or more than the above-mentioned lower limit, impact strength and post-storage color hue can be improved. When the content of the compound (C) is equal to or less than the above-mentioned upper limit, impact strength and oxygen barrier properties can be improved. According to the present invention, impact strength, oxygen barrier properties and post-storage color hue can be significantly improved even when the compound (C) is contained in a small amount.

### <Polyoxyalkylene (D) and polyol plasticizer (E)>

The resin composition according to the present invention may further comprise a polyoxyalkylene (D) and/or a polyol plasticizer (E). When a polyoxyalkylene (D) and/or a polyol plasticizer (E) is contained, impact strength, post-storage color hue, winding properties and anti-adhesiveness can be improved.

The polyoxyalkylene (D) includes a polyalkylene oxide and a polyalkylene glycol, and has a constituent unit represented by formula (2): 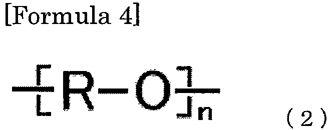 (wherein R represents an alkylene group; and n represents 1 or more) (the constituent unit is also referred to as "constituent unit (2), hereinafter). The polyoxyalkylene (D) may have two or more different constituent units (2).

In formula (2), examples of the alkylene group include alkylene groups each having 2 to 10 carbon atoms, such as an ethylene group, a propylene group, a trimethylene group, a butylene group, an isobutylene group, a pentylene group, a hexylene group, a heptylene group, an octylene group, a nonylene group and a decylene group. Among these groups, an alkylene group having 2 to 6 carbon atoms is preferred, and an ethylene group and/or a propylene group is more preferred, from the viewpoint that impact strength, winding properties, anti-adhesiveness and folding resistance can be improved. When n is 2 or more, these alkylene groups may be used singly, or two or more of them may be used in combination.

In formula (2), n is preferably 5 or more, more preferably 50 or more, still more preferably 100 or more, and is preferably 120,000 or less, more preferably 70,000 or less. When n falls within the above-mentioned range, impact strength, oxygen barrier properties, winding properties, anti-adhesiveness and folding resistance can be improved. When the polyoxyalkylene (D) contains different constituent units (2) from each other, the repeating numbers n of the constituent units may be the same as or different from each other.

An example of the polyalkylene oxide is a polymer having a constituent unit derived from an alkylene oxide having 2 to 6 carbon atoms, and the polymer is specifically polyethylene oxide, polypropylene oxide, polytrimethylene oxide (polyoxetane), polybutylene oxide, polyisobutylene oxide, or a copolymer of monomers that constitute these polymers. An example of the polyalkylene glycol is a polymer having a constituent unit derived from an alkylene glycol having 2 to 6 carbon atoms, and the polymer is specifically polyethylene glycol, polypropylene glycol, polytrimethylene glycol, polybutylene glycol, polyisobutylene glycol, or a copolymer of monomers that constitute these polymers. Among these compounds, the polyoxyalkylene (D) is preferably polyethylene oxide, polypropylene oxide, polyethylene glycol, polypropylene glycol, or a copolymer of monomers that constitute these monomers, from the viewpoint that impact strength, winding properties, anti-adhesiveness and folding resistance can be improved. Preferred examples of the copolymer include a copolymer of ethylene oxide and propylene oxide and a copolymer of ethylene glycol and propylene glycol.

The polyoxyalkylene (D) may contain a constituent unit derived from another monomer that is different from the monomer for the constituent unit (2), as long as the effects of the present invention cannot be deteriorated. When the polyoxyalkylene (D) is a copolymer, the polymerization form of the copolymer is not particularly limited, and may be a random form, a block form, a graft form or a tapered form.

The weight average molecular weight of the polyoxyalkylene (D) is preferably 10,000 or more, more preferably 50,000 or more, and is preferably 5,000,000 or less, more preferably 3,000,000 or less. When the weight average molecular weight falls within the above-mentioned range, impact strength, oxygen barrier properties, winding properties, anti-adhesiveness and folding resistance can be improved.

As the polyoxyalkylene (D), a commercially available product may be used. Typical examples of the commercially available product of the polyoxyalkylene (D) include ALKOX (trademark) E-75G, ALKOX (trademark) L-11, ALKOX (trademark) L-6 and ALKOX (trademark) EP1010N manufactured by Meisei Chemical Works, Ltd., and PEO (trademark) PEO-1 and PEO-2 manufactured by Sumitomo Seika Chemicals Co. Ltd.

When the resin composition according to the present invention contains the polyoxyalkylene (D), the content of the polyoxyalkylene (D) is preferably 0.1 parts by mass or more, more preferably 0.5 parts by mass or more, and is preferably 10 parts by mass or less, more preferably 8 parts by mass or less, still more preferably 5 parts by mass or less, furthermore preferably 3 parts by mass or less, per 100 parts by mass that is the total amount of the components (A), (B), (C), (D) and (E). When the content of the polyoxyalkylene (D) is equal to or more than the above-mentioned lower limit, impact strength, post-storage color hue, winding properties, anti-adhesiveness and folding resistance can be improved. When the content is equal to or less than the above-mentioned upper limit, oxygen barrier properties can be improved.

The polyol plasticizer (E) can improve the flexibility of the resin composition, and therefore can be used particularly for controlling the hardness or softness of the resin composition. Examples of the polyol plasticizer (E) include sorbitol, maltitol, glycerol, mannitol, xylitol, erythritol, ethylene glycol and propylene glycol. These polyol plasticizers (E) may be used singly, or two or more of them may be used in combination. Among these compounds, sorbitol is preferred from the viewpoint that impact strength, post-storage color hue, oxygen barrier properties, winding properties, anti-adhesiveness, flexibility and folding resistance can be improved.

When the resin composition according to the present invention contains the polyol plasticizer (E), the content of the polyol plasticizer (E) is preferably 0.01 parts by mass or more, more preferably 0.1 parts by mass or more, still more preferably 0.5 parts by mass or more, and is preferably 5 parts by mass or less, more preferably 4 parts by mass or less, still more preferably 3 parts by mass or less. When the content of the polyol plasticizer (E) is equal to or more than the above-mentioned lower limit, the flexibility of the resin composition can be improved. When the content is equal to or less than the above-mentioned upper limit, impact strength, post-storage color hue, oxygen barrier properties, winding properties, anti-adhesiveness and folding resistance can be improved. As mentioned below, in the present invention, extrusion forming can be employed. Therefore, the resin composition can be produced using water or the like as a plasticizer without using the polyol plasticizer.

### <Resin composition>

The resin composition according to the present invention comprises 50 to 98 parts by mass of the modified starch (A), 2 to 50 parts by mass of the polyvinyl alcohol (B), and 0.01 to 0.15 parts by mass of the compound (C) per 100 parts by mass that is the total amount of the components (A), (B) and (C), in which the average amylose content in the component (A) is 50% by mass or more. Therefore, the resin composition can have both of excellent impact strength and excellent oxygen barrier properties. As a result, the resin composition can be effectively suppressed from the occurrence of breakage or the like even when being subjected to an impact while keeping the oxygen barrier properties thereof, and also has biodegradability. Furthermore, the resin composition according to the present invention can have an excellent color hue even when being stored for a long period in a water-containing state, because the resin composition contains the compound (C). Therefore, when it is intended to forming-process the composition containing water by using water as a plasticizer, the forming-processed product can be used even after being stored for a long period in a water-added state. In a preferred embodiment of the present invention, the resin composition according to the present invention further has excellent winding properties and excellent anti-adhesiveness. Therefore, in the production of, for example, a coated product, it becomes possible to produce the coated product at a high conveyance speed, and the occurrence of breakage or the like due to the adhesion to a metal roll can be prevented, and therefore the coated product can have satisfactory appearance. In addition, because the resin composition has excellent folding resistance, the penetration of a liquid or the like from a folded part in a formed product (e.g., a coated product) produced from the resin composition can be suppressed after the formed product is folded repeatedly. For these reasons, the resin composition according to the present invention can be used suitably as material for a food package or a container.

The resin composition according to the present invention may further comprise a fatty acid having 12 to 22 carbon atoms and/or a fatty acid salt thereof. Examples of the fatty acid having 12 to 22 carbon atoms and the fatty acid salt thereof include stearic acid, calcium stearate, sodium stearate, palmitic acid, lauric acid, myristic acid, linolenic acid and behenic acid. Among these compounds, stearic acid, calcium stearate and sodium stearate are preferred from the viewpoint of processability. These fatty acids each having 12 to 22 carbon atoms and fatty acid salts thereof may be used singly, or two or more of them may be used in combination.

When the resin composition according to the present invention contains the fatty acid having 12 to 22 carbon atoms and/or a fatty acid salt thereof, the content of the fatty acid and/or the fatty acid salt thereof is preferably 0.01 to 3% by mass, more preferably 0.03 to 2% by mass, still more preferably 0.1 to 1% by mass, per the mass of the resin composition. When the content of the fatty acid having 12 to 22 carbon atoms and/or the fatty acid salt thereof falls within the above-mentioned range, an advantage tends to be gained with respect to processability.

The resin composition according to the present invention may further comprise clay. An example of the clay is a synthetic or naturally-occurring layered silicate clay, such as montmorillonite, bentonite, beidellite, mica, hectorite, saponite, nontronite, sauconite, vermiculite, ledikite, magadiite, kenyaite, stevensite and volkonskoite. These clay substances may be used singly, or two or more of them may be used in combination.

When the resin composition according to the present invention contains clay, the content of the clay in the resin composition is preferably 0.1 to 5% by mass, more preferably 0.1 to 3% by mass, still more preferably 0.5 to 2% by mass, per the mass of the resin composition. When the content of the clay falls within the above-mentioned range, an advantage tends to be gained with respect to transparency, color hue and strength.

The resin composition according to the present invention may comprise another plasticizer (F) that is different from the polyol plasticizer (E). Examples of the another plasticizer (F) include water, glycerol trioleate, epoxidized linseed oil, epoxidized soybean oil, tributyl citrate, acetyltriethyl citrate, glyceryl triacetate and 2,2,4-trimethyl-1,3-pentanediol diisobutyrate. These plasticizers (F) may be used singly, or two or more of them may be used in combination. Among these plasticizers (F), water is preferred from the viewpoint that satisfactory film formability and coatability can be achieved.

From the viewpoint that the impact strength and oxygen barrier properties of the resin composition may be improved, the water content (amount of water) in the resin composition is preferably 3 to 20% by mass, more preferably 4 to 18% by mass, still more preferably 7 to 15% by mass, per the mass of the resin composition. The water content can be determined by measuring at 130°C for 60 minutes using, for example, an oven-drying moisture analyzer.

If necessary, the resin composition according to the present invention may further comprise additives such as a filler, a processing stabilizer, a weather resistance stabilizer, a coloring agent, an ultraviolet ray absorber, an optical stabilizer, an antioxidant agent, an antistatic agent, a flame-retardant agent, another thermoplastic resin, a lubricant agent, a flavoring agent, an antifoaming agent, a deodorant agent, a bulking agent, a separating agent, a mold-release agent, a reinforcing agent, a crosslinking agent, an anti-mold agent, a preservative agent and a crystallization speed delaying agent.

In the resin composition according to the present invention, the total content of the modified starch (A), the polyvinyl alcohol (B) and the compound (C) is preferably 60% by mass or more, more preferably 80% by mass or more, still more preferably 85% by mass or more, furthermore preferably 90% by mass or more, and is preferably 100% by mass or less, per the mass of the resin composition. When the total content of the components (A), (B) and (C) falls within the above-mentioned range, impact strength, oxygen barrier properties, post-storage color hue, winding properties, anti-adhesiveness and folding resistance can be improved. As mentioned above, when the component (D) and/or (E) is contained, the term "total content of the components (A), (B) and (C)" refers to the sum total of the total content of the components (A), (B) and (C) and the total content the component (D) and/or (E).

The resin composition according to the present invention may be in the form of pellets, a film or a sheet. When the resin composition according to the present invention is used in the form of a film or a sheet, the thickness of the film is generally 5 to 100 µm, and the thickness of the sheet is generally 100 to 1000 µm. The film or the sheet may be in a single-layer form or a multi-layer form (e.g., a laminate as mentioned below). In the present disclosure, the resin composition that is formed into pellets, a film or a sheet is also included within the scope of the term "resin composition", and the pellets, the film and the sheet each formed from the resin composition are also referred to as a "pellet-like resin composition", a "film-like resin composition" and a "sheet-like resin composition", respectively.

In one embodiment of the present invention, the impact strength of the resin composition according to the present invention is preferably 5 mN/µm or more, more preferably 6 mN/um or more, still more preferably 8 mN/µm or more, furthermore preferably 10 mN/um or more, particularly preferably 12 mN/um or more, particularly more preferably 14 mN/µm or more. When the impact strength is equal to or more than the above-mentioned lower limit, the occurrence of breakage or the like can be suppressed effectively even when the resin composition is subjected to an impact. The upper limit of the impact strength is generally 100 mN/µm or less. The impact strength can be measured using an impact strength measurement device after the resin composition is stored and humidified at 23°C at 50%RH for 2 weeks. For example, the impact strength can be measured by the method mentioned in the section [Examples].

In one embodiment of the present invention, the oxygen permeability (mL•20 µm/m²•atm•24hr) of the resin composition according to the present invention at 23°C/50%RH is preferably 5.0 or less, more preferably 4.0 or less, still more preferably 3.0 or less, furthermore preferably 2.8 or less. When the oxygen permeability is equal to or less than the above-mentioned upper limit, excellent oxygen barrier properties can be achieved. The oxygen permeability can be measured using an oxygen permeability measurement device after the resin composition is stored and humidified at 23°C at 50%RH for 2 weeks. For example, the oxygen permeability can be measured by the method mentioned in the section [Examples]. In the present disclosure, the wording "oxygen barrier properties are improved or increased" means that the oxygen permeability is reduced, and the wording "oxygen barrier properties are excellent" means that the oxygen permeability is small.

The resin composition according to the present invention has a b value of preferably 35 or less, more preferably 30 or less, still more preferably 25 or less, furthermore preferably 20 or less, particularly preferably 18 or less, particularly more preferably 16 or less, after the resin composition is stored at 23°C for 90 days in a water-containing state having a water content of 35±1% by mass. When the b value after the storage is equal to or less than the above-mentioned upper limit, excellent color hue can be achieved even after storage. The lower limit of the b value after storage is generally -10 or more. The b value after storage (also referred to as "yellow index (YI)") can be measured using a color meter after the resin composition is stored at 23°C for 90 days in a water-containing state having a water content of 35±1% by mass. For example, the b value after storage can be measured by the method mentioned the section [Examples].

### [Method for producing resin composition]

The resin composition according to the present invention can be produced by a method comprising a step (I) for mixing components constituting the resin composition, i.e., at least the modified starch (A), the polyvinyl alcohol (B) and the compound (C), together. In addition to the step (I), the method for producing the resin composition in a preferred embodiment of the present invention further comprises a step (II) for extruding a mixture obtained in the step (I) and a step (III) for cooling and drying the extruded mixture.

In the step (I), the modified starch (A), the polyvinyl alcohol (B) and the compound (C), and optionally the polyoxyalkylene (D) and/or the polyol plasticizer (E), another component such as the fatty acid having 12 to 22 carbon atoms and/or a fatty acid salt thereof, the clay, the plasticizer (F) and the additive can be mixed together.

In one embodiment of the present invention, in the step (I), it is preferred to mix the compound (C) with other components than the compound (C) simultaneously. According to this method, the impact strength, post-storage color hue, oxygen barrier properties, winding properties, anti-adhesiveness and folding resistance of the resin composition produced from these components can be improved. The term "other component than the compound (C)" refers to a component (or a raw material) that is different from the compound (C) that constitutes the resin composition.

The step (I) is generally performed using an extruder. In the extruder, shear stress is applied to the components by means of screws, and external heat is applied to a barrel, and the components are mixed homogeneously while heating.

As the extruder, for example, a twin screw extruder can be used. The twin screw extruder may be either one of a co-rotating type or a counter-rotating type. The screw diameter may be for example 20 to 150 mm, and the ratio of the extruder length (L) to the screw diameter (D), i.e., L/D ratio, may be for example 20 to 50. The rotating speed of the screws is preferably 80 rpm or more, more preferably 100 rpm or more. The extrusion forming pressure is preferably 5 bar (0.5 MPa) or more, more preferably 10 bar (1.0 MPa) or more. Each of the components may be introduced into the extruder directly. Alternatively, it is also possible to mix the components previously using a mixer and then introduce the resultant mixture into the extruder.

In the step (I), from the viewpoint that the film formability and oxygen barrier properties of the resin composition can be improved, it is preferred to mix a plasticizer (F), preferably water, in an amount of which the lower limit is preferably 0.1% by mass or more, more preferably 1% by mass or more, still more preferably 10% by mass or more, particularly preferably 15% by mass or more, most preferably 20% by mass or more, and the upper limit is preferably 50% by mass or less, more preferably 45% by mass or less, still more preferably 40% by mass or less, per the mass of the mixture. The term "mass of the mixture" refers to a total mass of a mixture containing the plasticizer (F). In step (I), the plasticizer (F) may be introduced at an initial stage of the extrusion, and may be introduced before the temperature reaches the above-mentioned heating temperature, e.g., at 100°C or lower. The modified starch (A) may be subjected to the cooking treatment with a combination of water, heat and a shear stress to gelatinize the modified starch (A). Alternatively, a water-soluble polymer such as the polyvinyl alcohol (B) can be dissolved by introducing the plasticizer (F), preferably water, to soften the resin composition, thereby reducing a modulus and brittleness of the resin composition.

In step (I), a cooking treatment is carried out while heating to a temperature of preferably 100°C or higher and 150°C or lower, more preferably 115°C to 140°C inclusive. The cooking treatment is a treatment for pulverizing and gelatinizing starch grains. The heating can be performed by applying heat to barrels in an extruder from the outside. Stepwisely varied temperatures are applied to the barrels to heat the barrels to a desired temperature. When the cooling treatment is carried out at a temperature higher than 120°C, an advantage can be gained with respect to processability.

From the purpose of preventing the occurrence of foaming, the mixture that has been subjected to the cooling treatment is preferably moved toward a die while decreasing the temperature to preferably 85 to 120°C, more preferably 90 to 110°C. The foaming can be prevented and water can be removed by discharging an exhaust gas.

The retention time to be employed in the extruder may be set depending on a temperature profile or a screw speed, and is preferably 1 to 2.5 minutes.

In the step (II) in which the mixture obtained in the step (I) is extruded, the molten mixture that has been moved in the extruder while being melt-kneaded is extruded through the die. The temperature of the die is preferably 85 to 120°C, more preferably 90 to 110°C.

In the step (III) in which the extruded mixture (molten product) is cooled and dried, the mixture (molten product) can be extruded into a film-like form, a sheet-like form or a strand-like form.

When the mixture is extruded into a film-like form or a sheet-like form, the mixture may be extruded through a film- or sheet-forming die and then cooled and dried while being wound around a winding roller. It is preferred that the mixture is cooled between the die and the roller while preventing the adherence of the mixture onto the roller. It is also possible to arrange a roller for shaping use between the die and the roller. The material for the roller for shaping use is, for example, a rubber, a resin or a metal. For the drying purpose, the roller may be warmed, and dehumidified air may be supplied during the winding. When a blowing tube method is employed, the dehumidified air can be used for expanding the film or the sheet upon the discharge of the film or the sheet through the die. It is also possible to entrain talc together with air flow to prevent the film or the sheet from blocking.

When the mixture is extruded into a strand-like form, the mixture is extruded through a strand nozzle having a plurality of pores and the extruded strands are cut with a rotary cutter to produce a pellet-like product. For the purpose of preventing the sticking of the pellets to each other, water (or moisture) can be removed from the pellets by applying vibrations at regular intervals or continuously and drying the pellets with hot air, dehumidified air or an infrared ray heater.

### [Water-containing composition and production method thereof)

The present invention includes a water-containing composition which comprises the resin composition and has a water content of 1 to 50% by mass. In one embodiment of the present invention, for the purpose of improving the film formability of the resin composition, water may be added to the resin composition upon the coating of the resin composition on a paper or a film to prepare a water-containing composition.

In the present invention, the resin composition is composed of the above-mentioned components. Therefore, the stickiness caused as the result of the addition of water can be prevented, the winding properties and the maximum draw ratio during the production of the coated product can be improved, and the adhesiveness to a metal roll can be reduced (i.e., anti-adhesiveness can be improved). The water content can be determined by measuring at 130°C for 60 minutes using an oven-drying moisture analyzer. For example, the water content can be measured by the method mentioned in the section [Examples]. In the present disclosure, the term "water-containing composition" includes all of water-containing resin composition each having a water content of 1 to 50% by mass as measured by the above-mentioned method. The water-containing composition may be produced by adding water to the produced resin composition, which is included within the concept of the water-containing resin composition as long as the water content in the resin composition itself falls within the above-mentioned range at the time point at which the resin composition is produced. In other words, even when the resin composition contains water, the resin composition is included within the concept of the resin composition. However, particularly the resin composition having a water content of 1 to 50% by mass is referred to as the "water-containing composition".

The water content in the water-containing composition according to the present invention is preferably 5% by mass or more, more preferably 8% by mass or more, and is preferably 45% by mass or less, more preferably 40% by mass or less. When the water content falls within the above-mentioned range, the impact strength, oxygen barrier properties, winding properties, anti-adhesiveness and folding resistance of the resultant formed product can be improved. In the present disclosure, the term "formed product" refers to a modified form of the resin composition or the water-containing composition. For example, a sheet-like or film-like product of the resin composition, and a coated product, a laminate, a multi-layer structure, a packaging material and the like each produced using the resin composition or the water-containing composition are also included within the scope of the formed product.

In one preferred embodiment of the present invention, the water-containing composition according to the present invention can be produced by adding water to the resin composition and then agitating and mixing the resultant mixture. For the purpose of preventing the sticking of parts of the resin composition to each other and allowing water to be adsorbed throughout the pellets, it is preferred to perform the agitating while adding water in two or more divided portions. For the purpose of keeping the water content constant, the water-containing composition may be stored in an airtight container. In another embodiment of the present invention, the water-containing composition may be produced by a method comprising a step for mixing the components other than the compound (C) together to produce a mixture and then adding an aqueous solution of the compound (C) to the mixture and a step for optionally further drying the resultant mixture. The resin composition may be produced by this method. One example of the method for producing the mixture is a method that is the same as the resin composition production method described in the section [method for producing resin composition] mentioned above. The aqueous solution of the compound (C) can be produced by, for example, adding water to the compound (C) and then, for example, agitating and mixing the resultant solution. The amount of water in the aqueous solution of the compound (C) may be adjusted appropriately depending on the solubility of the compound (C) or the water content in the water-containing composition or the resin composition. The during temperature and the drying time to be employed in the drying step may be selected appropriately depending on the water content in the water-containing composition or the resin composition or the like.

### [Coated product and production method thereof)

The present invention includes a coated product comprising a paper or a film coated with the water-containing composition of the present invention. The coated product according to the present invention contains the water-containing composition, and therefore has excellent impact strength and oxygen barrier properties. When the coated product is produced from the water-containing composition that is stored for a long period in a water-containing state, the coated product can have excellent color phase. In a preferred embodiment of the present invention, both of high winding properties and anti-adhesiveness which are less likely to be achieved simultaneously under ordinally circumstances can be achieved simultaneously. Therefore, the coated product can be produced at a high conveyance speed while suppressing the breakage or the like of the coated product due to the adhesion of the coated product onto a metal roll, and the yield and production efficiency of the coated product can be improved. Furthermore, folding resistance and biodegradability can become also superior.

When a paper is coated with water-containing composition, the type of the paper is not particularly limited, and example of the paper include kraft paper, high-quality paper, simili paper, glassine paper, parchment paper, synthetic paper, white paperboard, Manila board, milk carton, cup base paper, ivory paper, white silver paper, tissue paper, paper board and rayon paper. The thickness of the paper in the coated product is not particularly limited, and is preferably 1 to 500 µm, more preferably 10 to 300 µm. When the thickness of the paper in the coated product falls within the above-mentioned range, the winding speed during the production of the coated product can be increased and, as a result, the productivity of the coated product can be improved.

When a film is coated with the water-containing composition, the type of the film is not particularly limited. Examples of the film include a polyethylene terephthalate (PET) film, a biaxially stretched polypropylene (BOPP) film, a polyethylene (PE) film (preferably a low-density polyethylene (LDPE) film) and a polylactic acid film. The thickness of the film in the coated product is not particularly limited, and is preferably 1 to 500 µm, more preferably 10 to 300 µm, still more preferably 50 to 100 µm.

The thickness of the water-containing composition in the coated product according to the present invention is preferably 1 to 300 µm, more preferably 5 to 100 µm, still more preferably 10 to 50 µm. When the thickness of the water-containing composition in the coated product falls within the above-mentioned range, satisfactory film formability and oxygen barrier properties can be achieved, the impact strength of the coated product can be improved, and the adhesion onto a metal roll during production can be suppressed.

In one embodiment of the present invention, the oxygen permeability of the coated product according to the present invention may be selected within the same range as that of the oxygen permeability of the resin composition. In this case, the meaning and the measurement method for the oxygen permeability are the same as those for the resin composition.

The method for producing the coated product according to the present invention is not particularly limited, as long as the paper or the film can be coated with the water-containing composition. In a preferred embodiment, the coated product according to the present invention can be produced by a method comprising a step for coating the film or the paper conveyed by a winding machine with the water-containing composition using an extruder (the step is referred to as step (A)).

In one embodiment of the present invention, in the step (A), the water-containing composition is charged in an extruder. Examples of the extruder include a single screw extruder and a twin screw extruder. The screw diameter of the extruder is, for example, 20 to 150 mm, the ratio L/D of the extruder length (L) to the screw diameter (D) is, for example, 15 to 50, and the rotating speed of the screw is preferably 80 rpm or more, more preferably 100 rpm or more. The cylinder temperature in the extruder may be for example 80 to 120°C, preferably 90 to 110°C.

The water-containing composition charged into the extruder is plasticized and is discharged through a die outlet port. On the other hand, the paper or the film is conveyed using a winding machine, preferably a roller-type winding machine. The water-containing composition discharged through the die outlet port is applied onto the conveyed paper or film to produce a coated product. The coated product thus produced can be conveyed while compressing together with the paper or the film between a plurality of rolls including a metal roll, and can be then wound in a roll-like form using a winding machine. Examples of the plurality of rolls include a press roll, a cast roll and a touch roll, in which the cast roll is generally a metal roll (i.e., a roll made from a metal). In the present invention, the adhesiveness between the applied water-containing composition and the metal roll is low, and therefore the releasability from the metal roll is high. Therefore, the adhesion of the water-containing composition in the coated product to the metal roll can be prevented effectively and therefore the breakage or the like of the coated product can also be prevented effectively. In the production of the coated product, because water is volatilized or the like, the water content in the water-containing composition after the application of the water-containing composition is reduced compared with that before the application of the water-containing composition. However, it is preferred that the water content in the water-containing composition after the application of the water-containing composition also falls within the range that is mentioned above as being preferred as the water content in the water-containing composition.

In step (A), the draw ratio represented by formula (X) shown below is preferably 5 to 20. When the coated product is produced at this draw ratio, productivity can be improved, and a coated product having excellent adhesiveness between the paper or the film and the water-containing composition, excellent oxygen barrier properties and excellent impact strength can be produced. The flow rate at the die outlet port in the extruder is expressed by the formula: (discharged amount)/((lip clearance) × (die width)), as mentioned above. In the case where the discharged amount is expressed in a mass per unit time, the discharged amount is preferably 1 to 500 kg/hr, more preferably 5 to 200 kg/hr, the lip clearance is preferably 0.01 to 5 mm, more preferably 0.1 to 1 mm, and the die width is preferably 100 to 3000 mm, more preferably 200 to 2000 mm. In the present invention, because water in the water-containing composition is volatilized during the production process, the water content in the water-containing composition in the coated product is reduced compared with that before the production. Draw down ratio = (winding speed of winding machine) / (flow rate at die outlet port in extruder)

### [Multi-layer structure and packaging material each comprising the coated product]

The present invention includes a multi-layer structure comprising the coated product and one or more layers (X). An example of the layer (X) is a film, a paper or an adhesive agent. When there are two or more layers (X), the layers (X) may be the same as or different from each other. The multi-layer structure according to the present invention has a plurality of layers (X), in which the number of the layers is not particularly limited and is, for example 3 to 10 layers. Examples of the film and the paper are those mentioned as the examples of the film and the paper in the section [Coated product and production method thereof).

Examples of the adhesive agent that may be contained in the multi-layer structure include an acrylic adhesive agent, a urethane-based adhesive agent, an epoxy-based adhesive agent, a vinyl acetate-based adhesive agent, an ethylene-vinyl acetate-based adhesive agent, a vinyl chloride-based adhesive agent, a silicone-based adhesive agent, a nitrilcellulose-based adhesive agent, a phenol-based adhesive agent, a polyvinyl alcohol-based adhesive agent, a melamine-based adhesive agent, and a styrene-based adhesive agent.

In a preferred embodiment of the present invention, the multi-layer structure has a layered structure composed of (a film)/(an adhesive agent)/(a water-containing composition)/(a paper)/(an adhesive agent)/(a film) that are layered in this order. In this aspect, the type of the film or the paper is not particularly limited, and the film is preferably a polyethylene film.

The present invention includes a packaging material comprising the coated product or the multi-layer structure according to the present invention. The packaging material has excellent impact strength, oxygen barrier properties, adhesiveness between the water-containing composition and the paper or the film, biodegradability and folding resistance, and therefore can be used suitably as a packaging material for foods.

### [Film or sheet comprising the resin composition, and laminate comprising the film or the sheet]

The present invention includes a film or a sheet comprising the resin composition (i.e., a film-like resin composition, a sheet-like resin composition). The film or the sheet according to the present invention has excellent impact strength and oxygen barrier properties, as mentioned above.

In one embodiment of the present invention, the oxygen permeability and impact strength of the film or the sheet according to the present invention can be selected respectively from the same ranges as those mentioned for the oxygen permeability and the impact strength in the section <Resin composition>.

The method for producing the film or the sheet according to the present invention is not particularly limited. For example, the method for producing a film or a sheet from the resin composition as mentioned above in the section [Method for producing resin composition] can be mentioned.

The present invention includes a laminate comprising a film or a sheet and one or more layer (X). As the layer (X), the same layer as the layer (X) mentioned above in the section [Multi-layer structure and packaging material containing the coated product] can be used. In a preferred embodiment of the present invention, the laminate preferably has a layer structure composed of, for example, (a sheet-like or a film-like resin composition layer)/(an adhesive layer)/(a base material layer) that are layered in this order. The adhesive layer comprises an adhesive agent, and the base material layer comprises, for example, a film.

The method for producing the laminate according to the present invention is not particularly limited, and the laminate is preferably produced by lamination. When the laminate is composed of (a sheet-like or a film-like resin composition layer) / (an adhesive layer) / (a base material layer) that are layered in this order, one example of the method is a method comprising a step for co-extruding the adhesive layer and the base material layer and a step for coating the adhesive layer side of the co-extruded product with the sheet-like or film-like resin composition layer. Other examples of the method include: a method comprising a step for extruding the adhesive layer and a step for applying the adhesive layer between the sheet-like or film-like resin composition layer and the base material layer; and a method comprising a step for applying a dissolution solution or a dispersion solution of the adhesive agent on the sheet-like or film-like resin composition layer or the base material layer with a gravure roll or the like and then drying the dissolution solution or the dispersion solution and a step for closely adhering the adhesive layer side to either one of the sheet-like or film-like resin composition layer or the base material layer that is not coated with the adhesive agent.

In one embodiment of the present invention, in the step for co-extruding the adhesive layer and the base material layer, for example, a two-type two-layer co-extrusion cast film formation facility (an extruder manufactured by PLABOR Research Laboratory of Plastics Technology Co., Ltd.) (an extruder (a): for the base material layer: single screw, screw 40 mm diameter, L/D = 32; an extruder (b); for the adhesive layer: single screw, screw 32 mm diameter, L/D = 26) can be used. The temperature condition for the extruder may be set appropriately depending on the type of the thermoplastic resin to be used. For example, when PET (polyethylene terephthalate) is extruded with the extruder (a) (for the base material layer), the conditions including a cylinder temperature of 250 to 270°C, an adapter temperature of 270°C, and a die temperature of 275°C may be employed.

For example, when a polyolefin is extruded with the extruder (b) (for the adhesive layer), the conditions including a cylinder temperature of 175 to 270°C, an adapter temperature of 270°C, and a die temperature of 275°C may be employed. The absolute value of the difference between the die temperature of the extruder (a) and the die temperature of the extruder (b) is preferably within 10°C, more preferably 0°C. For example, when the optimum die temperature for a resin to be used in the extruder (a) and the optimum die temperature for a resin to be used in the extruder (b) are different from each other, it is preferred to adjust the die temperature by employing a higher one among the optimum die temperatures.

In the step for subsequently coating the adhesive layer side with the sheet-like or film-like resin composition, for example, a method comprising applying the adhesive layer side of the co-extruded laminate on the sheet-like or film-like resin composition while taking up the adhesive layer side, and then bonding the adhesive layer side and the sheet-like or film-like resin composition to each other with a nip roll can be employed. The winding speed is preferably 1 to 50 m/min. Preferred examples of the extruder are mentioned above. However, the type of the extruder, the screw diameter and the L/D ratio may be varied appropriately.

### [Packaging container and production method thereof]

The present invention includes a packaging container comprising the film or the sheet according to the present invention or the laminate according to the present invention, particularly a tray or a cup for packaging use. The packaging container may be composed of only the laminate according to the present invention, or may further contain other material in combination. For example, the laminate according to the present invention may be thermoformed to produce the packaging container.

In one embodiment of the present invention, the packaging container according to the present invention, particularly a tray or cup for packaging use, can be produced by a method comprising a step for shaping the resin composition into a film or a sheet using an extruder, a step for laminating one or more layer (X) on the film or the sheet to produce a laminate, and a step for thermoforming the laminate into a tray or cup for packaging use.

For the step for shaping the resin composition into a film or a sheet using an extruder, the film or the sheet forming method mentioned above in the section [Method for producing resin composition] may be employed, for example. For the step for laminating at least one layer (X) on the film or the sheet by lamination to produce a laminate, the laminate production method mentioned above in the section [Film or sheet comprising resin composition, and laminate containing the film or sheet] may be employed, for example.

The method for thermoforming in the step for thermoforming the laminate into a tray or cup for packaging use is not particularly limited. Examples of the method include a common a vacuum forming method and a pressure forming method which have been employed commonly, a plug assist method which is a modification of these method and comprises bringing a plug into contact with one surface of a laminate to performing the shaping (forming), and a so-called "multi-mold forming) method which comprises bringing a pair of male and female molds into contact with both surface of a laminate, respectively, to perform the shaping (forming). Examples of the method for softening the laminate by heating before forming include a non-contact method and a direct method. An example of the non-direct heating method is radiation heating using an infrared ray heater or the like. For the direct heating, a known heating method such as a platen heating method in which the laminate is made contact with a heating platen directly may be employed.

The packaging container according to the present invention has excellent impact strength and oxygen barrier properties, and therefore can be used suitably particularly as a food packaging container.

### EXAMPLES

Hereinbelow, the present invention will be described in detail with reference to examples. However, the present invention is not limited to these examples.

### <Test methods>

### (1) Method for evaluating impact strength

Each of sheet-like resin compositions (sheets) produced in Examples and Comparative Examples was stored and humidified at 23°C under 50%RH for 2 weeks and was then cut into a piece having a size of 10 × 10 cm, and the piece was subjected to the measurement of impact strength using a film impact tester manufactured by Toyo Seiki Co., Ltd.

### (2) Measurement of oxygen permeability

Each of sheet-like resin compositions (sheets) produced in Examples and Comparative Examples was stored and humidified at 23°C under 50%RH for two weeks, and was then attached to an oxygen permeability measurement device to measure oxygen permeability. The measurement conditions were as follows.
Device: "MOCON OX-TRAN2/20" manufactured by Modern Control Co., Ltd.
Temperature: 23°C
Humidity on oxygen supply side and carrier gas side: 50%RH
Oxygen pressure: 1.0 atm
Carrier gas pressure: 1.0 atm

When oxygen permeability is 5.0 (mL•20 µm/m²•atm•24 hr) or less, it is evaluated that the oxygen barrier properties are satisfactory.

### (3) Method for evaluating color hue (b value)

Water was added to each of the pellet-like resin compositions produced in Examples and Comparative Examples in such a manner that the water content became 35% by mass, and then the resultant mixture was agitated in such a manner that pellets and water became homogeneous to adsorb water by the pellet. With respect to Example 14, n-propylparaben sodium salt (5 g) was dissolved in water in such an amount that the water content became 35% by mass, the resultant aqueous solution of the n-propylparaben sodium salt was added to the pellet-like resin composition, and the resultant mixture was agitated in such a manner that pellets and water became homogeneous so as to adsorb water by the pellets. The water content was confirmed as being 35±1% by mass by the measurement using an oven-drying moisture analyzer "HR73" manufactured by METTLER TOLEDO at 130°C for 60 minutes. For the purpose of preventing the volatilization of water, the sample was hermetically packed in an aluminum pouch and was then stored at 23°C for 3 months (90 days), and the stored pellet-like resin composition was subjected to the measurement of b value (yellow index, YI) using a color meter "ZE-2000" manufactured by NIPPON DENSHOKU INDUSTRIES Co., Ltd.

### (4) Measurement of viscosity of polyvinyl alcohol (B)

A 4% aqueous solution of polyvinyl alcohol in each of Examples and Comparative Examples was prepared and the viscosity of the 4% aqueous solution was measured at 20°C in accordance with JIS Z 8803 (a falling ball viscometer) and JIS K 6726(a polyvinyl alcohol test method) using Hoppler viscometer to determine the viscosity (20°C) of the 4% aqueous solution of the polyvinyl alcohol (B).

### (5) Materials used

### <High-amylose modified starch (A-1)>

- ECOFILM (trademark): corn starch modified with propylene oxide, amylose content: 70% by mass, manufactured by Ingredion Incorporated.

### <Low-amylose modified starch (A-2)>

- National 1658 (trademark): corn starch modified with propylene oxide, amylose content: 20% by mass, manufactured by Ingredion Incorporated.

### <Polyvinyl alcohol (B)>

- ELVANOL (trademark) 71-30: a polyvinyl alcohol resin, saponification degree: 99 mol% or more, viscosity: 27-33 mPa•s (20°C, a 4% aqueous solution), manufactured by Kuraray Co., Ltd.
- Kuraray Poval (trademark) 5-98: a polyvinyl alcohol resin, saponification degree 98 mol%, viscosity: 5 mPa•s (20°C, a 4% aqueous solution), manufactured by Kuraray Co., Ltd.
- Kuraray Poval (trademark) 3-98: a polyvinyl alcohol resin, saponification degree 98 mol%, viscosity: 3 mPa•s (20°C, a 4% aqueous solution), manufactured by Kuraray Co., Ltd.

### <Additive components>

(Compound (C))
   - n-propylparaben sodium salt: manufactured by Ueno Fine Chemicals Industry, Ltd.
   - n-propylparaben: manufactured by Ueno Fine Chemicals Industry, Ltd.
   - methylparaben: manufactured by Ueno Fine Chemicals Industry, Ltd.
   - benzylparaben: manufactured by Ueno Fine Chemicals Industry, Ltd.
(Compounds other than compound (C))
   - benzoic acid: manufactured by FUJIFILM Wako Pure Chemical Corporation
   - sorbic acid: manufactured by FUJIFILM Wako Pure Chemical Corporation
   - propionic acid: manufactured by Tokyo Chemical Industry Co., Ltd.
   - sodium benzoate: manufactured by FUJIFILM Wako Pure Chemical Corporation
   - impact strength improver 1: talc, manufactured by Nippon Talc Co., Ltd., product name: "NANO ACE (trademark)"
   - impact strength improver 2: silicone-acrylic rubber particles, manufactured by Mitsubishi Chemical Corporation, product name: "METABLEN S-2030 (trademark)"
(Compound (D))
   - polyethylene oxide (PEO) resin: weight average molecular weight 100,000, manufactured by Meisei Chemical Works, Ltd., product name: "ALKOX (trademark) L-11"
(Compound (E))
   - sorbitol: manufactured by B Food Science Co., Ltd., product name: "Sorbitol SG"

### <Example 1>

### (Resin composition)

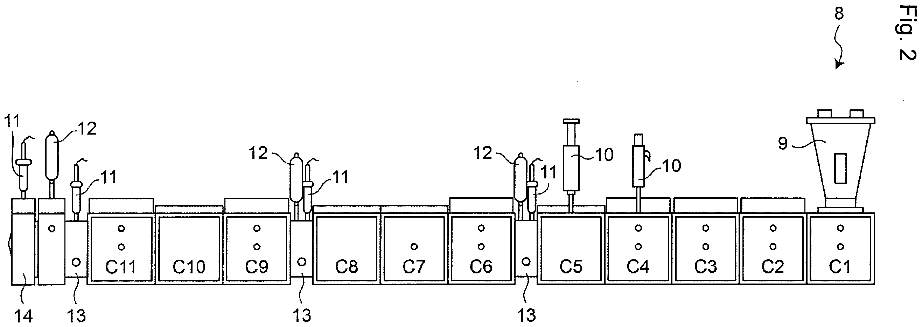

ECOFILM (trademark) (9.795 kg), Kuraray Poval (trademark) 5-98 (200 g) and n-propylparaben sodium salt (5 g), which were starting materials, were mixed together in a tumbler mixer for 2 hours, and the resultant mixture was charged in a twin screw extruder having a liquid pump connected thereto. The schematic diagram of the twin screw extruder used in Example 1 is shown in Fig. 2, and the screw diameter, the LID ratio, the rotating speed, the operation mode and the temperature profile of the extruder are shown in Table 1.

**[Table 1]**

| Temperature profile A [°C]: | | | | | | | | | | | | |
|---|---|---|---|---|---|---|---|---|---|---|---|---|
| C1 | C2 | C3 | C4 | C5 | C6 | C7 | C8 | C9 | C10 | C11 | Adapter | Die |
| 40 | 70 | 80 | 90 | 120 | 140 | 130 | 120 | 120 | 100 | 100 | 100 | 100 |

Screw diameter: 27 mm
LID ratio: 48
Screw rotating speed: 500 rpm
Operation mode: co-rotating (intermeshing self-wiping) mode

More specifically, the resultant mixture was supplied into a barrel via a weight feeder in a twin screw extruder through a hopper located at C1 at a flow rate of 3.5 kg/hr. Water was sprayed into the barrel at a flow rate of 26 g/min through a liquid pump (L) located at C4. The temperature zones located at C5 to C9 were cooking zone, and the complete pregelatinization of the starch was completed in these zones. The resultant product was extruded through a film forming die located at a position behind C11 and was then wound around a winding roller. During the winding, the roll was warmed and dehumidified air was supplied to perform the drying and cooling of the sheet. After the drying and cooling, a sheet-like resin composition (sheet) having a thickness of 100 pm was obtained.

### (Coated product)

The extrusion was carried out in the same manner as mentioned above, in which a strand nozzle having a plurality of pores and a rotary cutter were used in place of the film forming die to form the strands of the mixture in the form of pellets. The pellets contained water in an excessive amount. Therefore, for the purpose of preventing the sticking of the pellets to each other, water was removed from the pellets with hot air while applying vibrations constantly. Water was added to the resultant pellet-like resin composition until the water content became 35% by mass per the mass of the resin composition. During the addition of water, for the purpose of preventing the sticking of the pellets to each other and allowing water to be absorbed throughout the pellets uniformly, the mixture were agitated in a tumbler mixer for 15 minutes while adding the water in several divided potions. After the agitation, for the purpose of preventing the volatilization of water, the mixture were packed in a polyethylene bag, were then hermetically sealed, and were then left to stand at room temperature for 6 hours. In this manner, water-containing pellets (a water-containing composition) having a water content of 35% by mass were produced. The water content was confirmed by the measurement using an oven-drying moisture analyzer "HR73" manufactured by METTLER TOLEDO at 130°C for 60 minutes.

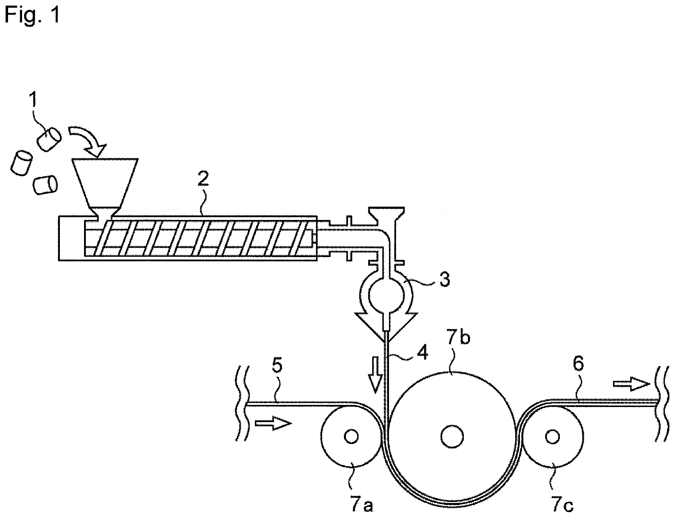

Subsequently, the resultant water-containing pellets were charged into a single screw extruder 2 shown in Fig. 1, and was then extruded through a film formation die 3. Subsequently, the water-containing composition 4 extruded through an outlet port of the die 3 was applied onto paper 5 that was conveyed by a roller-type winding machine (not shown). A coated product 6 thus produced was immediately allowed to pass through a press roll (made from a rubber) 7a, a cast roll (made from a metal) 7b and a touch roll (made from a rubber) 7c to press-bond the water-containing composition to the paper 5 (a base material), and the resultant product was wound in a roll-like shape using a winding machine (not shown). The single screw extruder used, the details about the operation conditions, and the temperature profile (Table 2) are shown below.
- single screw extruder: an extruder manufactured by PLABOR Research Laboratory of Plastics Technology Co., Ltd. (diameter: 40 mm, LID = 25)
- preset temperature:

**[Table 2]**

| Single screw extruder cylinder | | | | Adapter | Die |
|---|---|---|---|---|---|
| C1 | C2 | C3 | C4 | | |
| 100°C | 100°C | 100°C | 100°C | 100°C | 100°C |

- discharged amount: 20 kg/hr
- die: a coat hanger die having a width of 450 mm, lip clearance: 0.2 mm
- distance between die and cast roll (air gap): 150 mm
- paper: manufactured by Nippon Paper Industries Co., Ltd., white silver (uncoated paper, thickness: 70 µm)

In the coated product thus produced, the unevenness in thickness and the contamination with foreign matters were not observed. Therefore, the coated product had satisfactory appearance.

### <Example 2>

A sheet-like resin composition, a water-containing composition and a coated product were produced in the same manner as in Example 1, except that ECOFILM (trademark) (6.995 kg), Kuraray Poval (trademark) 5-98 (3.00 kg) and n-propylparaben sodium salt (5 g) were used as starting materials.

### <Example 3>

A sheet-like resin composition, a water-containing composition and a coated product were produced in the same manner as in Example 1, except that ECOFILM (trademark) (8.995 kg), ELVANOL (trademark) 71-30 (1.00 kg) and n-propylparaben sodium salt (5 g) were used as starting materials.

### <Example 4>

A sheet-like resin composition, a water-containing composition and a coated product were produced in the same manner as in Example 3, except that ECOFILM (trademark) (6.746 kg) and National 1658 (trademark) (2.249 kg) were used as the starch.

### <Example 5>

A sheet-like resin composition, a water-containing composition and a coated product were produced in the same manner as in Example 3, except that Kuraray Poval (trademark) 3-98 (1.00 kg) was used as the polyvinyl alcohol (B).

### <Example 6>

A sheet-like resin composition, a water-containing composition and a coated product were produced in the same manner as in Example 1, except that ECOFILM (trademark) (7.999 kg), Kuraray Poval (trademark) 5-98 (2.00 kg) and n-propylparaben sodium salt (1 g) were used as starting materials.

### <Example 7>

A sheet-like resin composition, a water-containing composition and a coated product were produced in the same manner as in Example 1, except that ECOFILM (trademark) (7.995 kg), Kuraray Poval (trademark) 5-98 (2.00 kg) and n-propylparaben sodium salt (5 g) were used as starting materials.

### <Example 8>

A sheet-like resin composition, a water-containing composition and a coated product were produced in the same manner as in Example 1, except that ECOFILM (trademark) (7.990 kg), Kuraray Poval (trademark) 5-98 (2.00 kg) and n-propylparaben sodium salt (10 g) were used as starting materials.

### <Example 9>

A sheet-like resin composition, a water-containing composition and a coated product were produced in the same manner as in Example 7, except that n-propylparaben was used in place of n-propylparaben sodium salt.

### <Example 10>

A sheet-like resin composition, a water-containing composition and a coated product were produced in the same manner as in Example 7, except that methylparaben was used in place of n-propylparaben sodium salt.

### <Example 11>

A sheet-like resin composition, a water-containing composition and a coated product were produced in the same manner as in Example 7, except that benzylparaben was used in place of n-propylparaben sodium salt.

### <Example 12>

A sheet-like resin composition, a water-containing composition and a coated product were produced in the same manner as in Example 1, except that ECOFILM (trademark) (7.895 kg), Kuraray Poval (trademark) 5-98 (2.00 kg), n-propylparaben sodium salt (5 g) and ALKOX (trademark) L-11 (100 g) were used as starting materials.

### <Example 13>

A sheet-like resin composition, a water-containing composition and a coated product were produced in the same manner as in Example 1, except that ECOFILM (trademark) (7.895 kg), Kuraray Poval (trademark) 5-98 (2.00 kg), n-propylparaben sodium salt (5 g) and sorbitol SG (100 g) were used as starting materials.

### <Example 14>

A pellet-like resin composition was produced in the same manner as in Example 1, except that ECOFILM (trademark) (7.995 kg) and Kuraray Poval (trademark) 5-98 (2.00 kg) were used as starting materials. Subsequently, n-propylparaben sodium salt (5 g) was dissolved in water in such an amount that the water content in a water-containing composition became 35% by mass, the resultant aqueous solution of n-propylparaben sodium salt is mixed with the pellet-like resin composition to allow the pellet-like resin composition to absorb water to produce a water-containing composition having a water content of 35%. A coated product was produced from the water-containing composition in the same manner as in Example 1. The same procedure as in the process for the production of a coated product was carried out, except that a single-layer film was produced without passing paper that served as a base material, and then the resultant single-layer film was dried. In this manner, a sheet-like resin composition having a thickness of 100 pm was produced.

### <Comparative Example 1>

A sheet-like resin composition, a water-containing composition and a coated product were produced in the same manner as in Example 7, except that ECOFILM (trademark) (1.599 kg) and National 1658 (6.396 kg) were used as starch.

### <Comparative Example 2>

A sheet-like resin composition, a water-containing composition and a coated product were produced in the same manner as in Example 1, except that ECOFILM (trademark) (9.995 kg) and n-propylparaben sodium salt (5 g) were used as starting materials.

### <Comparative Example 3>

A sheet-like resin composition, a water-containing composition and a coated product were produced in the same manner as in Example 1, except that ECOFILM (trademark) (9.895 kg), Kuraray Poval (trademark) 5-98 (100 g) and n-propylparaben sodium salt (5 g) were used as starting materials.

### <Comparative Example 4>

A sheet-like resin composition, a water-containing composition and a coated product were produced in the same manner as in Example 1, except that ECOFILM (trademark) (8.000 kg) and Kuraray Poval (trademark) 5-98 (2.00 kg) were used as starting materials.

### <Comparative Example 5>

A sheet-like resin composition, a water-containing composition and a coated product were produced in the same manner as in Example 1, except that ECOFILM (trademark) (8.000 kg), Kuraray Poval (trademark) 5-98 (2.00 kg) and n-propylparaben sodium salt (0.1 g) were used as starting materials.

### <Comparative Example 6>

A sheet-like resin composition, a water-containing composition and a coated product were produced in the same manner as in Example 1, except that ECOFILM (trademark) (7.980 kg), Kuraray Poval (trademark) 5-98 (2.00 kg) and n-propylparaben sodium salt (20 g) were used as starting materials.

### <Comparative Example 7>

A sheet-like resin composition, a water-containing composition and a coated product were produced in the same manner as in Example 1, except that ECOFILM (trademark) (7.800 kg), Kuraray Poval (trademark) 5-98 (2.00 kg) and NANO ACE (trademark) (200 g) were used as starting materials.

### <Comparative Example 8>

A sheet-like resin composition, a water-containing composition and a coated product were produced in the same manner as in Example 1, except that ECOFILM (trademark) (7.800 kg), Kuraray Poval (trademark) 5-98 (2.00 kg) and METABLEN S-2030 (trademark) (200 g) were used as starting materials.

### <Comparative Example 9>

A sheet-like resin composition, a water-containing composition and a coated product were produced in the same manner as in Example 1, except that ECOFILM (trademark) (7.990 kg), Kuraray Poval (trademark) 5-98 (2.00 kg) and benzoic acid (10 g) were used as starting materials.

### <Comparative Example 10>

A sheet-like resin composition, a water-containing composition and a coated product were produced in the same manner as in Example 1, except that ECOFILM (trademark) (7.990 kg), Kuraray Poval (trademark) 5-98 (2.00 kg) and sorbic acid (10 g) were used as starting materials.

### <Comparative Example 11>

A sheet-like resin composition, a water-containing composition and a coated product were produced in the same manner as in Example 1, except that ECOFILM (trademark) (7.990 kg), Kuraray Poval (trademark) 5-98 (2.00 kg) and propionic acid (10 g) were used as starting materials.

### <Comparative Example 12>

A sheet-like resin composition, a water-containing composition and a coated product were produced in the same manner as in Example 1, except that ECOFILM (trademark) (7.990 kg), Kuraray Poval (trademark) 5-98 (2.00 kg) and sodium benzoate (10 g) were used as starting materials.

### <Comparative Example 13>

A sheet-like resin composition, a water-containing composition and a coated product were produced in the same manner as in Example 1, except that ECOFILM (trademark) (7.790 kg), Kuraray Poval (trademark) 5-98 (2.00 kg), sodium benzoate (10 g) and NANO ACE (trademark) (200 g) were used as starting materials.

### <Comparative Example 14>

A sheet-like resin composition, a water-containing composition and a coated product were produced in the same manner as in Example 1, except that ECOFILM (trademark) (7.790 kg), Kuraray Poval (trademark) 5-98 (2.00 kg), sodium benzoate (10 g) and METABLEN S-2030 (trademark) (200 g) were used as starting materials.

In the coated products produced in Examples 2 to 13, the unevenness in thickness or the contamination with foreign matters was not observed. Therefore, the coated products had satisfactory appearance.

With respect to sheet-like resin compositions produced in Examples and Comparative Examples, the results of the measurement of impact strength, oxygen permeability (23°C·50%RH), and color hue (b value) after storage for 3 months in a water-containing state having a water content of 35±1% by mass are shown in Table 3. The average amylose content (shown as "Average Am content") in the modified starch (A) and the content of the modified starch (A), the saponification degree, the viscosity (20°C) of a 4% aqueous solution and the content of the polyvinyl alcohol (B), the types and contents of additive components [the type and content of compound (C) or other component than the component (C), the type and content of the compound (D), and the type and content of the compound (E)] are also shown in Table 3. The methods for adding the component (C) are also shown in Table 3.

**[Table 3-1]**

| | Modified starch (A) | | Polyvinyl alcohol (B) | | | Additive component | | | | Compound (D) | | Compound (E) | | Impact strength | Oxygen permeability | Post-storage b value |
|---|---|---|---|---|---|---|---|---|---|---|---|---|---|---|---|---|
| | Average Am content (part by mass) | Content (part by mass) | Saponification degree (mol%) | Viscosity (mPa s) | Content (part by mass) | Compound (C) | Compound other than compound (C) | Content (part by mass) | Addition method | Type | Content (part by mass) | Type | Content (part by mass) | (mN/pm) | (mL ·20 µm/m^{2·} atm ·2 4 hr) | |
| Ex. 1 | 70 | 97.95 | 98 | 5 | 2.00 | n-propylparaben sodium salt | - | 0.05 | add simultaneously with components other than (C) | - | - | - | - | 7 | 3.2 | 16 |
| Ex. 2 | 70 | 69.95 | 98 | 5 | 30.00 | n-propylparaben sodium salt | - | 0.05 | add simultaneously with components other than (C) | - | - | - | - | 15 | 0.8 | 15 |
| Ex. 3 | 70 | 89.95 | 99.0-99.8 | 27-33 | 10.00 | n-propylparaben sodium salt | - | 0.05 | add simultaneously with components other than (C) | - | - | - | - | 15 | 1.9 | 15 |
| Ex. 4 | 57.5 | 89.95 | 99.0-99.8 | 27-33 | 10.00 | n-propylparaben sodium salt | - | 0.05 | add simultaneously with components other than (C) | - | - | - | - | 14 | 1.9 | 16 |
| Ex. 5 | 70 | 89.95 | 98 | 3 | 10.00 | n-propylparaben sodium salt | - | 0.05 | add simultaneously with components other than (C) | - | - | - | - | 10 | 2.8 | 16 |
| Ex. 6 | 70 | 79.99 | 98 | 5 | 20.00 | n-propylparaben sodium salt | - | 0.01 | add simultaneously with components other than (C) | - | - | - | - | 7 | 2.5 | 22 |
| Ex. 7 | 70 | 79.95 | 98 | 5 | 20.00 | n-propylparaben sodium salt | - | 0.05 | add simultaneously with components other than (C) | - | - | - | - | 8 | 2.5 | 18 |
| Ex. 8 | 70 | 79.90 | 98 | 5 | 20.00 | n-propylparaben sodium salt | - | 0.10 | add simultaneously with components other than (C) | - | - | - | - | 9 | 3.2 | 14 |
| Ex. 9 | 70 | 79.95 | 98 | 5 | 20.00 | n-propylparaben | - | 0.05 | add simultaneously with components other than (C) | - | - | - | - | 10 | 2.7 | 16 |
| Ex. 10 | 70 | 79.95 | 98 | 5 | 20.00 | methylparaben | - | 0.05 | add simultaneously with components other than (C) | - | - | - | - | 9 | 2.6 | 14 |
| Ex. 11 | 70 | 79.95 | 98 | 5 | 20.00 | benzylparaben | - | 0.05 | add simultaneously with components other than (C) | - | - | - | - | 10 | 2.7 | 15 |
| Ex. 12 | 70 | 78.95 | 98 | 5 | 20.00 | n-propylparaben sodium salt | - | 0.05 | add simultaneously with components other than (C) | PEO | 1.00 | - | - | 9 | 3.3 | 14 |
| Ex. 13 | 70 | 78.95 | 98 | 5 | 20.00 | n-propylparaben sodium salt | - | 0.05 | add simultaneously with components other than (C) | - | - | sorbitol | 1.00 | 10 | 2.9 | 16 |
| Ex. 14 | 70 | 79.95 | 98 | 5 | 20.00 | n-propylparaben sodium salt | - | 0.05 | add aqueous solution to resin composition excluding (C) | - | - | - | - | 8 | 2.4 | 17 |

**[Table 3-2]**

| | Modified starch (A) | | Polyvinyl alcohol (B) | | | Additive component | | | | Compound (D) | | Compound (E) | | Impact strength | Oxygen permeability | Post- storage b value |
|---|---|---|---|---|---|---|---|---|---|---|---|---|---|---|---|---|
| | Average Am content (part by mass) | Content (part by mass) | Saponification degree (mol%) | Viscosity (mPa -s) | Content (part by mass) | Compound (C) | Compound other than compound (C) | Content (part by mass) | Addition method | Type | Content (part by mass) | Type | Content (part by mass) | (mN/pm) | (mL ·20 pm/m2 ·atm · 24 hr) | |
| C. Ex. 1 | 30 | 79.95 | 98 | 5 | 20.00 | n-propylparaben sodium salt | - | 0.05 | add simultaneously with components other than (C) | - | - | - | - | 0.2 | 45 | 15 |
| C. Ex. 2 | 70 | 99.95 | . | . | 0.00 | n-propylparaben sodium salt | - | 0.05 | add simultaneously with components other than (C) | - | - | - | - | 1 | 22 | 16 |
| C. Ex. 3 | 70 | 98.95 | 98 | 5 | 1.00 | n-propylparaben sodium salt | - | 0.05 | add simultaneously with components other than (C) | - | - | - | - | 2 | 8.2 | 16 |
| C. Ex. 4 | 70 | 80.00 | 98 | 5 | 20.00 | - | - | - | add simultaneously with components other than (C) | - | - | - | - | 3 | 3.2 | 42 |
| C. Ex. 5 | 70 | 80.00 | 98 | 5 | 20.00 | n-propylparaben sodium salt | - | 0.001 | add simultaneously with components other than (C) | - | - | - | - | 3 | 3.1 | 40 |
| C. Ex. 6 | 70 | 79.80 | 98 | 5 | 20.00 | n-propylparaben sodium salt | - | 0.2 | add simultaneously with components other than (C) | - | - | - | - | 2 | 10 | 14 |
| C. Ex. 7 | 70 | 78.00 | 98 | 5 | 20.00 | - | Talc | 2 | add simultaneously with components other than (C) | - | - | - | - | 4 | 5.8 | 42 |
| C. Ex. 8 | 70 | 78.00 | 98 | 5 | 20.00 | - | rubber particles | 2 | add simultaneously with components other than (C) | - | - | - | - | 3 | 8.2 | 48 |
| C. Ex. 9 | 70 | 79.90 | 98 | 5 | 20.00 | - | benzoic acid | 0.1 | add simultaneously with components other than (C) | - | - | - | - | 2 | 22 | 15 |
| C. Ex. 10 | 70 | 79.90 | 98 | 5 | 20.00 | - | sorbic acid | 0.1 | add simultaneously with components other than (C) | - | - | - | | 3 | 21 | 14 |
| C. Ex. 11 | 70 | 79.90 | 98 | 5 | 20.00 | - | propionic acid | 0.1 | add simultaneously with components other than (C) | - | - | - | - | 1 | 34 | 18 |
| C. Ex. 12 | 70 | 79.90 | 98 | 5 | 20.00 | - | sodium benzoate | 0.1 | add simultaneously with components other than (C) | - | - | - | - | 1 | 10 | 18 |
| C. Ex. 13 | 70 | 77.90 | 98 | 5 | 20.00 | - | sodium benzoate | 0.1 | add simultaneously with components other than (C) | - | - | - | - | 3 | 10 | 15 |
| | | | | | | | talc | 2 | | | | | | | | |
| C. Ex. 14 | 70 | 77.90 | 98 | 5 | 20.00 | - | sodium benzoate | 0.1 | add simultaneously with components other than (C) | - | - | - | - | 2 | 14 | 16 |
| | | | | | | | rubber particles | 2 | | | | | | | | |

As shown in Table 3, the resin compositions produced in Examples 1 to 14 had significantly higher impact strength compared with all of the resin compositions produced in Comparative Examples 1 to 14. It was confirmed that the resin compositions produced in Examples 2 to 7, 9 to 11, 13 and 14 had smaller oxygen permeability compared with the resin compositions produced in Comparative Examples 1 to 14, and the resin compositions produced in Examples 1, 8 and 12 had lower oxygen permeability compared with the resin compositions produced in Comparative Examples 1 to 3 and 6 to 14 and had the same level of oxygen permeability as those of the resin compositions produced in Comparative Examples 4 and 5. Consequently, it was found that the resin compositions produced in Examples 1 to 14 had excellent impact strength and oxygen barrier properties.

Furthermore, as shown in Table 3, it was confirmed that the resin compositions produced in Examples 1 to 14 had excellent impact strength and oxygen barrier properties, also had small b values even after the storage for 3 months in a water-containing state having a water content of about 35% by mass, and also had excellent color hues.

A bonded laminate was produced by bonding a PET sheet having a thickness of 200 um (Novaclear (trademark) A3020, manufactured by Mitsubishi Chemical Corporation) onto both surfaces of the sheet-like resin composition produced in Example 3 with an adhesive agent (a mixture of Takelac (trademark) A520 and Takenate (trademark) A50, manufactured by Mitsui Chemicals, Inc. at a mixing ratio of 10 : 1 (by weight)). The laminate was thermoformed using a press and vacuum thermoforming machine (FKS-0632-20, manufactured by ASANO LAB.) under the conditions including a heater temperature of 600°C, a sheet surface temperature of 120°C, a heating time of 10 seconds and a forming pressure of 3 kg/cm² to produce a cup-like product (inner diameter: 70 mm, height: 110 mm). In this formed product thus produced, breakage, unevenness in thickness, cloudiness or the like was not observed, and a cup having satisfactory appearance was produced.

### DESCRIPTION OF REFERENCE SIGNS

1: Water-containing pellet
2: Single screw extruder
3: Film formation die
4: Water-containing composition
5: Paper
6: Coated product
7a: Pressure roll (made from a rubber)
7b: Cast roll (made from a metal)
7c: Touch roll (made from a rubber)
8: Twin screw extruder
9: Hopper
10: Liquid addition nozzle
11: Resin temperature meter
12: Resin pressure meter
13: Adapter
14: Die

## Claims

1. A resin composition comprising:
50 to 98 parts by mass of modified starch (A);
2 to 50 parts by mass of polyvinyl alcohol (B); and
0.01 to 0.15 parts by mass of a compound represented by formula (1): 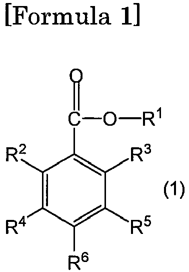 (wherein R¹ represents an alkyl group having 1 to 12 carbon atoms, an aryl group having 6 to 20 carbon atoms, or an aralkyl group having 7 to 20 carbon atoms; R² to R⁵ independently represent a hydrogen atom, a halogen atom, an alkyl group having 1 to 12 carbon atoms, a hydroxyl group, or an alkoxy group having 1 to 12 carbon atoms; and R⁶ represents a hydroxyl group, or an alkoxy group having 1 to 12 carbon atoms)
or a salt thereof (C),
wherein the total content of the components (A), (B) and (C) is 100 parts by mass, and the average amylose content in the modified starch (A) is 50% by mass or more.

2. The resin composition according to claim 1, wherein R¹ is an alkyl group having 1 to 6 carbon atoms or an aralkyl group having 7 to 9 carbon atoms in formula (1).

3. The resin composition according to claim 1 or 2, wherein the total content of the modified starch (A), the polyvinyl alcohol (B) and the compound represented by formula (1) or a salt thereof (C) is 80% by mass or more per the mass of the resin composition.

4. The resin composition according to any one of claims 1 to 3, wherein the modified starch (A) is at least one selected from the group consisting of etherified starch, esterified starch, cationized starch and crosslinked starch.

5. The resin composition according to any one of claims 1 to 4, wherein the modified starch (A) is at least one selected from the group consisting of etherified starch having a hydroxyalkyl group having 2 to 6 carbon atoms and esterified starch having a structural unit derived from a dicarboxylic anhydride.

6. The resin composition according to any one of claims 1 to 5, wherein a 4% aqueous solution of the polyvinyl alcohol (B) has a viscosity at 20°C of 1 to 50 mPa ·s when measured in accordance with JIS Z 8803.

7. The resin composition according to any one of claims 1 to 6, wherein the resin composition further comprises 0.1 to 10 parts by mass of a polyoxyalkylene (D) and/or 0.01 to 5 parts by mass of a polyol plasticizer (E), and the total content of the components (A), (B), (C), (D) and (E) is 100 parts by mass.

8. A water-containing composition comprising the resin composition according to any one of claims 1 to 7, wherein the water content of the water-containing composition is 1 to 50% by mass.

9. A coated product comprising a paper or a film and the water-containing composition according to claim 8 coated on the paper or the film.

10. A multi-layer structure comprising the coated product according to claim 9 and one or more layer (X).

11. A packaging material comprising the coated product according to claim 9 or the multi-layer structure according to claim 10.

12. A method for producing the coated product according to claim 9, the method comprising a step for coating a film or a paper conveyed by a winding machine with the water-containing composition according to claim 8 using an extruder.

13. A film or a sheet comprising the resin composition according to any one of claims 1 to 7.

14. A laminate comprising the film or the sheet according to claim 13 and one or more layer (X).

15. A tray or a cup for packaging, comprising the film or the sheet according to claim 13, or the laminate according to claim 14.

16. A method for producing the tray or the cup for packaging according to claim 15, the method comprising:
a step for shaping the resin composition according to any one of claims 1 to 7 using an extruder to produce a film or a sheet;
a step for laminating one or more layer (X) on the film or the sheet by means of lamination to produce a laminate; and
a step for thermoforming the laminate into a tray or a cup for packaging.

17. A method for producing the resin composition according to any one of claims 1 to 7, the method comprising a step for mixing the compound represented by formula (1) or a salt thereof (C) with a component other than the component (C) simultaneously.

18. A method for producing the resin composition according to any one of claims 1 to 7 or the water-containing composition according to claim 8, the method comprising:
a step for mixing a component other than a compound represented by formula (1) or a salt thereof (C) together to produce a mixture, and then adding an aqueous solution of the component (C) to the mixture; and
optionally, a step for further drying the resultant mixture.
